# EUROPÄISCHE PATENTSCHRIFT

(11) **EP 1 122 865 B1**
(45) Veröffentlichungstag und Bekanntmachung des Hinweises auf die Patenterteilung: **08.11.2006**
(21) Anmeldenummer: 00102051.0
(22) Anmeldetag: 02.02.2000
(51) Int. Cl.: H02K 9/18

(54) **Rotationsmaschinenanordnung mit einer Rotationsmaschine und mit einer Kühlvorrichtung**
Rotary electrical machine arrangement with a rotary electrical machine and a cooling device
Agencement de machine électrique tournante avec machine électrique tournante et dispositif de refroidissement

(43) Veröffentlichungstag der Anmeldung: 08.08.2001
(73) Patentinhaber: SIEMENS AKTIENGESELLSCHAFT, 80333 München (DE)
(72) Erfinder: Terwolbeck, Ulrich, 45481 Mülheim (DE)

(56) Entgegenhaltungen:
- EP-A- 0 301 318
- DE-A- 4 032 944
- FR-A- 1 493 177
- US-A- 4 807 354
- US-A- 4 845 394
- US-A- 5 844 333

## Beschreibung

Die Erfindung bezieht sich auf eine elektrische Rotationsmaschine, insbesondere auf einen Generator, beispielsweise einen Turbogenerator für ein Kraftwerk zur Energieerzeugung. Die Erfindung betrifft weiterhin eine Rotationsmaschinenanordnung sowie ein Verfahren zum Betreiben einer Rotationsmaschine.

Bei einer elektrischen Rotationsmaschine, insbesondere bei einem Generator mit hoher Leistung im Energieerzeugungsbereich, ist eine Kühlung des Generators notwendig. Zur Kühlung wird über Kühlgaskanäle durch den Generator ein Kühlmedium, insbesondere ein gasförmiges Medium, geführt. Bei Turbogeneratoren mit hoher Leistung wird üblicherweise als Kühlmedium Wasserstoff verwendet.

Zur Kühlung haben Generatoren herkömmlicher Bauart an einer ihrer Stirnseiten als Kühlvorrichtung einen Kühlerkopf mit Kühlern. Die Kühlvorrichtung ist also im Generator integriert. Zur Umwälzung des Kühlgases durch den Generator weist die Kühlvorrichtung einen Verdichter, beispielsweise ein Gebläse, auf. Das Gebläse ist in der Regel über eine Gebläsenabe mit dem Läufer des Generators verbunden.

Bei einem solchen Generator herkömmlicher Bauweise besteht das Problem, dass bei einem Schaden des Verdichters der eigentliche Generatorbereich, insbesondere dessen Läufer, in Mitleidenschaft gezogen wird.

Das Dokument DE 40 32 944 beschreibt eine gasgekühlte elektrische Maschine mit einem Rotor, einem Stator und einem den Stator umgebenden Gehäuse. Das den Stator umgebende Gehäuse weist eine Statorwicklung mit Statorwicklungsstäben auf. Die Statorwicklungsstäbe sind mit Hohlleitern versehen, durch welche in Maschinenlängsrichtung Kühlgas hindurchleitbar ist.

In dem Dokument EP 0 301 318 wird eine elektrische Maschine mit einem Wärmetauscher offenbart. Der Wärmetauscher ist hierbei auf der Oberseite der Maschine angebaut und primärseitig durch den im Maschinengehäuse unter dem Einfluss eines Maschinenventilators zirkulierenden Luftstrom und sekundärseitig durch einen von einem außen am Wärmetauscher angebauten Kühlventilator erzeugten Kühlluftstrom beaufschlagt.

Das Dokument US 4,807,354 offenbart eine Rotationsmaschinenanordnung gemäß dem Oberbegriff des Anspruchs 1.

Der Erfindung liegt die Aufgabe zugrunde, eine Kühlung für eine elektrische Rotationsmaschine, insbesondere für einen Generator, bereitzustellen, bei der ein sicherer Generatorbetrieb gewährleistet ist.

Die Aufgabe wird gemäß der Erfindung gelöst durch eine Rotationsmaschinenanordnung, insbesondere durch eine Generatoranordnung, mit einer Kühlvorrichtung und mit einer Rotationsmaschine, die einen Läufer, einen diesen umgebenden Ständer sowie ein mehrere Kühlgaskanäle aufweisendes Kühlsystem umfasst, wobei die Kühlvorrichtung eine separate Einheit bildet, die über einen Kühlgasanschluss mit dem Kühlsystem in Verbindung steht, wobei die separate Kühlvorrichtung einen Verdichter aufweist, der Warmgas von der Rotationsmaschine über den Kühlgasanschluss in der Kühlvorrichtung ansaugt.

Bevorzugte Ausführungsformen der Anordnung sind den Unteransprüchen zu entnehmen.

Die wesentliche Idee ist darin zu sehen, dass der Generator als eigenständige Einheit ohne integrierte Kühlvorrichtung ausgebildet ist. Die Kühlvorrichtung selbst bildet ebenfalls eine eigenständige Einheit. Über den Kühlgasanschluss ist die Kühlvorrichtung beispielsweise unmittelbar am Generator anschließbar oder über Rohrleitungen mit dessen Kühlsystem verbindbar.

Die Ausbildung als eigenständige Einheit hat den wesentlichen Vorteil, dass die Auswirkungen auf den Generator bei einem Schaden der Kühlvorrichtung deutlich geringer sind als bei der herkömmlichen integrierten Bauweise. Die eigenständige Ausbildung der Kühlvorrichtung ermöglicht zudem bei einem Ausfall oder bei einem Schaden der Kühlvorrichtung oder Teilen von ihr eine schnelle Reparatur. Unter Umständen ist es hierbei von Vorteil, die komplette Kühlvorrichtung auszutauschen, um die Ausfallzeit des Generators möglichst gering zu halten.

Im Hinblick auf die Kühlvorrichtung ist von Vorteil, dass Standardbauteile herangezogen werden können. Dies resultiert nicht zuletzt daher, dass sich die Auslegung der Kühlvorrichtung ausschließlich an der bereitzustellenden Kühlleistung orientiert. Da die Kühlvorrichtung separat und damit weitgehend unabhängig vom Generator ist, fließen nämlich generatorspezifische Randbedingungen im Hinblick auf geometrische oder elektrische Anforderungen nicht in die Auslegung der Kühlvorrichtung ein. Diese wird daher in vorteilhafter Weise von einem Spezialisten für Kühlerbau angefertigt, der keine besonderen Kenntnisse auf dem Gebiet des Generatorbaus aufweisen muss. Durch das Konzept mit separaten Einheiten wird also eine Spezialisierung erreicht, die die Qualität der einzelnen Komponenten positiv beeinflusst. Die Verwendung von Standardbauteilen für die Kühlervorrichtung begünstigt zudem die Reparaturzeiten.

Weitere Vorteile der Ausbildung des Generators als separate Einheit sind in der höheren Flexibilität im Hinblick auf die geometrische Anordnung des Generators in einem Kraftwerksgebäude sowie in der Verringerung des Gewichts des Generators zu sehen. Diese Gewichtsreduzierung im Vergleich zu der herkömmlichen integrierten Bauweise ist insbesondere beim Transport des Generators zu seinem Einsatzort von Vorteil.

In einer bevorzugten Ausführung ist die Kühlvorrichtung seitlich an der Rotationsmaschine angeordnet. Durch die seitliche Anordnung wird im Vergleich zu der herkömmlichen Bauweise die Generatorbaulänge verkürzt. Dies erleichtert zum einen den Transport des Generators und führt zum anderen zu einer Kosteneinsparung, da das Kraftwerksgebäude an die verkürzte Bauform angepasst werden kann.

Die Anordnung des Kühlgasanschlusses im Mittenbereich begünstigt eine homogene Kühlleistung, da die Strecke, die das Kühlgas im Generator zurücklegen muss, auf die halbe Längenausdehnung des Generators beschränkt ist.

In einer zweckdienlichen Ausgestaltung ist ein sich vom Läufer in radialer Richtung durch den Ständer erstreckender radialer Kühlgaskanal vorgesehen. Dies verbessert die Kühlwirkung für den Ständer, da dessen Kühlung sich aufgrund des radialen Kühlgaskanals aus einer Radialkühlung sowie aufgrund der üblicherweise in axialer Richtung geführten Kühlgaskanäle aus einer Axialkühlung zusammensetzt.

Um eine möglichst homogene und effiziente Kühlung zu erzielen, weist das Kühlsystem vorzugsweise zwei Teilkreisläufe auf, die sich von einander gegenüberliegenden Endbereichen des Generators zum radialen Kühlgaskanal erstrecken. Die beiden Teilkreisläufe sind also axial voneinander getrennt und dienen jeweils zur Kühlung einer Generatorhälfte, und zwar jeweils von einem Endbereich bis in etwa zum Mittenbereich, in dem der radiale Kühlgaskanal angeordnet ist.

In einer bevorzugten Ausführungsform umfasst der Kühlgasanschluss an den beiden Endbereichen des Gehäuses jeweils eine Gaszuführung und im Mittenbereich des Gehäuses eine Gasableitung. In den Endbereichen sind jeweils ein Ständerwickelkopf und ein Läuferwickelkopf angeordnet, die einen besonders hohen Kühlbedarf haben. Durch die Zuführung von kaltem Gas in den Endbereichen ist hier eine an den Kühlbedarf angepasste hohe Kühlleistung erreicht.

Insbesondere ist in einer bevorzugten Ausgestaltung der Anordnung die Kühlvorrichtung mit ihrem Kühlergehäuse an das Gehäuse der Rotationsmaschine angeschlossen. Kühlvorrichtung und Kühlergehäuse bilden also eine Baueinheit. Diese Baueinheit besteht aus zwei separaten Einheiten, nämlich aus dem Generator einerseits und der Kühlvorrichtung andererseits. Diese unmittelbare Anordnung der Kühlvorrichtung am Generator verkürzt die Strömungswege. Im Vergleich zu einer getrennten Aufstellung der beiden separaten Einheiten sind die Anforderungen an die Strömungsführung, insbesondere im Hinblick auf die Dichtheit, reduziert. Dies ist insbesondere bei Turbogeneratoren von Vorteil, bei denen als Kühlmedium in der Regel Wasserstoff verwendet wird.

In zweckdienlicher Weise werden für eine einfache Strömungsführung in der Kühlvorrichtung Gasleitbleche herangezogen.

In einer bevorzugten Ausführung bilden das Kühlsystem und die Kühlvorrichtung mehrere in axialer Richtung nebeneinander angeordnete Kühlkreisläufe. Diese Kühlkreisläufe weisen insbesondere keinen Überlapp in axialer Richtung auf und haben eine gleiche oder zumindest eine benachbarte Radialkomponente. Die Kühlkreisläufe sind daher nach Art von nebeneinander angeordneten Schleifen ausgebildet. Damit wird die Kühlleistung in vorteilhafter Weise auf mehrere Kühlkreisläufe verteilt, so dass eine besonders homogene und effektive Kühlung erzielt ist.

Vorzugsweise weist die Kühlvorrichtung mehrere Kühler auf, so dass eine redundante Absicherung gewährleistet ist. Zweckdienlicherweise ist dabei jedem Kühlkreislauf jeweils mindestens ein Kühler zugeordnet.

Ein Ausführungsbeispiel wird im Folgenden anhand der Zeichnung näher erläutert. Es zeigen in schematischer und grob vereinfachter Darstellung:
- FIG 1: eine Generatoranordnung herkömmlicher Bauweise mit integrierter Kühlvorrichtung in einem Längsschnitt,
- FIG 2: eine Generatoranordnung mit einer separaten und seitlich am Generator angeschlossenen Kühlvorrichtung in einem Längsschnitt, und
- FIG 3: einen Querschnitt durch eine Generatoranordnung mit seitlich angeschlossener Kühlvorrichtung.

In den Figuren sind gleich wirkende Bauteile mit den gleichen Bezugszeichen versehen.

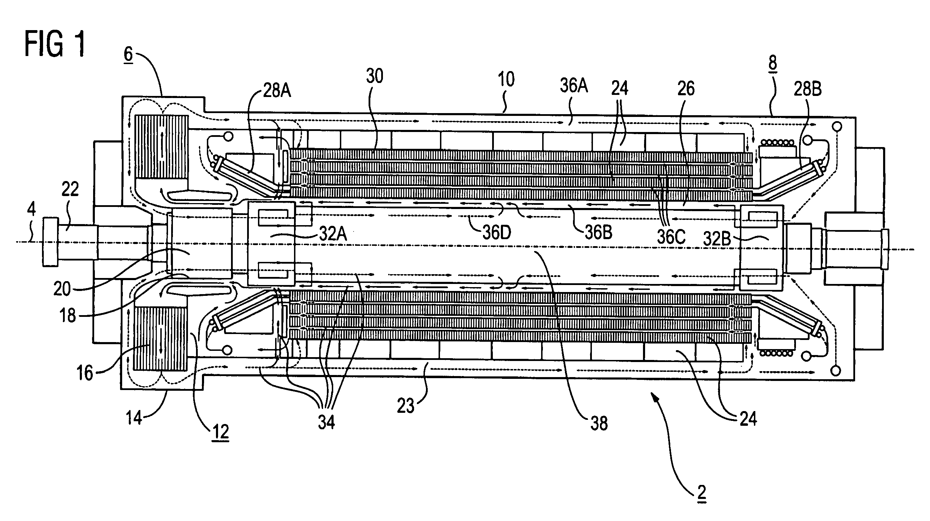

Gemäß FIG 1 erstreckt sich eine Rotationsmaschinenanordnung, insbesondere eine Generatoranordnung 2 entlang einer Längsachse 4 von einem turbinenseitigen Endbereich 6 zu einem erregerseitigen Endbereich 8. Die Generatoranordnung 2 weist ein Gehäuse 10 auf. Im turbinenseitigen Endbereich 6 ist eine Kühlvorrichtung 12 angeordnet. Und zwar sind in einem Kühlerkopf 14, der ein Teil des Gehäuses 10 ist, zwei Kühler 16 und ein Verdichter in Form eines Gebläses 18 mit einer Gebläsenabe 20 angeordnet. Die Gebläsenabe 20 sitzt auf einem Läufer 22, der sich entlang der Längsachse 4 durch die Generatoranordnung 2 erstreckt. Im Anschluss an die Kühlvorrichtung 12 in Richtung der Längsachse 4 ist der eigentliche Generatorbereich 23 angeordnet. In diesem Bereich ist der Läufer 22 von einem Ständer 24 unter Bildung eines Luftspalts 26 umgeben. Der Ständer 24 weist eine Ständerwicklung mit einem turbinenseitigen Ständerwickelkopf 28A und mit einem erregerseitigen Ständerwickelkopf 28B auf. Zwischen den beiden Ständerwickelköpfen 28A,28B ist ein sogenanntes Blechpaket 30 angeordnet. Analog zum Ständer 24 weist der Läufer 22 einen turbinenseitigen Läuferwickelkopf 32A und einen erregerseitigen Läuferwickelkopf 32B auf.

Aufgrund der bei Turbogeneratoren üblichen hohen Leistungsdichte ist eine Kühlung der Generatoranordnung 2 im Generatorbereich 23 notwendig. Einen besonders hohen Kühlbedarf haben hierbei die Ständerwickelköpfe 28A, 28B, sowie die Läuferwickelköpfe 32A,32B. Zur Kühlung des Generatorbereichs 23 weist dieser ein Kühlsystem 34 auf, welches von der Kühlvorrichtung 12 mit Kühlgas versorgt wird. Das Kühlsystem 34 hat eine Anzahl von Kühlgaskanälen 36A-D,48, über die das Kühlgas in einem Kreislauf geführt wird. Ein erster Kühlgaskanal 36A erstreckt sich hierbei in axialer Richtung und ist zwischen dem Ständer 24 und dem Gehäuse 10 angeordnet. Ein zweiter Kühlgaskanal 36B ist vom Luftspalt 26 gebildet. Weitere sich in axialer Richtung erstreckende Kühlgaskanäle 36C führen durch das Blechpaket 30. Zur Kühlung des Läufers 22 führt durch diesen ein Kühlgaskanal 36D. Die Kühlgasströmung im Generatorbereich 23 sowie in der Kühlvorrichtung 12 ist jeweils durch Pfeile angedeutet, wobei die gestrichelten Pfeile den Strömungsweg des kalten Kühlgases und die durchgezogenen Pfeile den Strömungsweg des erwärmten Kühlgases (Warmgas) angeben.

Zur Kühlung der Ständerwickelköpfe 28A, 28B teilt sich der von den Kühlern 16 kommende Kühlgas-Strom im turbinenseitigen Endbereich 6 auf. Der eine Teilstrom dient zur Kühlung des turbinenseitigen Ständerwickelkopfs 28A und der andere Teilstrom wird über den Kühlgaskanal 36A zum erregerseitigen Ständerwickelkopf 28B weitergeleitet und nochmals aufgeteilt. Der eine Teil dient zur Kühlung des Ständerwickelkopfs 28B und strömt von dort als Warmgas über den Luftspalt 26 wieder zurück. Der andere Teil wird durch die Kühlgaskanäle 36C des Blechpakets 30 geleitet und tritt im turbinenseitigen Endbereich 6 als Warmgas aus und wird den Kühlern 16 zugeführt. Zur Kühlung der Läuferwickelköpfe 32A,32B wird Kühlgas in den Kühlgaskanal 36D des Läufers 22 sowohl vom turbinenseitigen Endbereich 6 als auch vom erregerseitigen Endbereich 8 eingeleitet. Ein Teilstrom des Kühlgases durchströmt die jeweiligen Läuferwickelköpfe 32A,32B und wird anschließend in den Luftspalt 26 als Warmgas geleitet und den Kühlern 16 zugeführt. Der verbleibende Teilstrom wird im Kühlgaskanal 36D weiter durch den Läufer 22 hindurchgeführt, und zwar derart, dass das Kühlgas von den beiden Läuferwickelköpfen 32A, 32B aufeinander zuströmt und etwa im Mittenbereich 38 des Generatorbereichs 23 in den Luftspalt 26 geleitet wird.

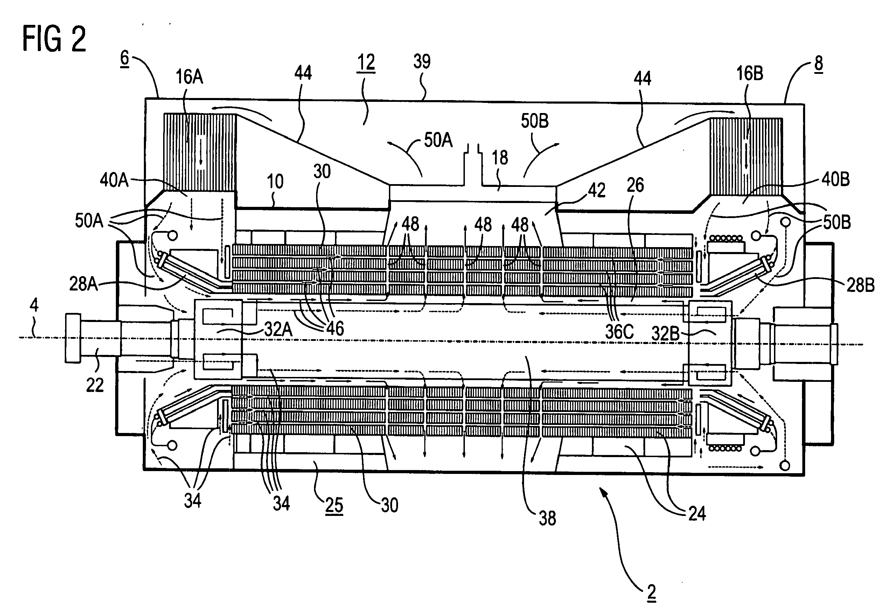

Die Generatoranordnung 2 gemäß FIG 2 weist im Hinblick auf die eigentlichen Generatorbauteile im Generatorbereich, also im Hinblick auf den Läufer 22, den Ständer 24, das Blechpaket 30, den Ständerwickelköpfen 28A, 28B sowie den Läuferwickelköpfen 32A, 32B den prinzipiell gleichen Aufbau wie die Anordnung gemäß FIG 1 auf. Im Unterschied zu der herkömmlichen Bauweise gemäß FIG 1 ist nach dem Ausführungsbeispiel gemäß FIG 2 der Generatorbereich als eigenständige Einheit ausgebildet, die als Generator 25 bezeichnet wird. Seitlich am Generator 25 ist die Kühlvorrichtung 12 angebracht. Dabei ist die Kühlvorrichtung 12 mit ihrem Kühlergehäuse 39 unmittelbar am Gehäuse 10 des Generators 25 angeschlossen. Zur Verdeutlichung ist das Gehäuse 10 mit breiterer Strichstärke dargestellt.

Um die Kühlvorrichtung 12 mit dem Kühlsystem 34 des Generators 25 zu verbinden, hat der Generator 25 einen mehrere Teilanschlüsse 40A, 40B; 42 aufweisenden Kühlgasanschluss, über den das Kühlgas dem Generator 25 aus der Kühlvorrichtung 12 zugeführt und wieder in diese als Warmgas abgeführt wird. Im vorliegenden Ausführungsbeispiel umfasst der Kühlgasanschluss an den beiden Endbereichen 6,8 jeweils eine Gaszuführung 40A,40B zur Zuführung von kaltem Kühlgas und im Mittenbereich 38 des Generators 25 eine Gasableitung 42. Über die zentrale Gasableitung 42 wird das Warmgas vom Verdichter 18 angesaugt, mit Hilfe von Gasleitblechen 44 zwei in den beiden Endbereichen 6,8 angeordneten Kühlern 16A,16B zugeleitet und anschließend über die Gaszuführungen 40A,40B dem Generator 25 an seinen gegenüberliegenden Endbereichen 6,8 wieder als Kühlgas zugeführt. Das Kühlgas strömt anschließend im Kühlsystem 34 in einer Anzahl von Teilkreisläufen 46 zum Mittenbereich 38 in axialer Richtung aufeinander zu. Im Mittenbereich 38 durchströmt das Kühlgas das Blechpaket 30 des Ständers 24 in radialer Richtung über radiale Kühlgaskanäle 48 und gelangt zur Gasableitung 42. Das Kühlgas wird gemäß dem Ausführungsbeispiel also in zwei schleifenartigen nebeneinander angeordneten Kühlkreisläufen 50A, 50B geführt. Jeder dieser Kühlkreisläufe 50a, 50B dient zur Kühlung einer Generatorhälfte. Diese Kühlgasführung hat den Vorteil, dass infolge des mittigen Abzugs des Kühlgases eine sehr homogene und gleichmäßige Kühlung der besonders kritischen Stellen im Bereich der Wickelköpfe 28A, 28B, 32A, 32B erreicht wird. Zudem wird dadurch eine effektive Kühlung des Blechpakets 30 erzielt, da dessen Kühlung sich zusammensetzt aus einer Axialkühlung über die Kühlgaskanäle 36C und aus einer Radialkühlung über die radialen Kühlgaskanäle 48.

Im Vergleich zu der herkömmlichen Gasführung gemäß FIG 1 hat sich die Kühlgasführung für die Ständerwicklungen 28A, 28B sowie die Kühlung des Blechpakets 30 verändert. Maßgebend für die veränderte Strömungsführung ist das Leiten des Kühlgases durch das Blechpaket 30 und durch den Luftspalt 26 in entgegengesetzten Richtungen zum Mittenbereich 38 hin. Im Wesentlichen unverändert ist die Strömungsführung für die Kühlung der Läuferwickelköpfe 32A, 32B.

Die beschriebene Ausführung der Generatoranordnung 2 hat gegenüber der herkömmlichen Ausführung eine Anzahl von Vorteilen. Zunächst ist die Kühlvorrichtung 12 eine eigenständige Einheit, die über die Kühlgasanschlüsse 40A,40B,42 in einfacher Weise an den Generator 25 angeschlossen und insbesondere an diesem befestigt ist. Da die Kühlvorrichtung 12 nicht im Generator 25 integriert ist, können die Kühlvorrichtung 12 und der Generator 25 unabhängig voneinander hergestellt werden. Für die Kühlvorrichtung 12 bedeutet dies, dass Standardbauteile verwendet werden können. Dies ermöglicht insbesondere in Verbindung mit der einfachen Anschließbarkeit der Kühlvorrichtung 12 ein leichtes und insbesondere schnelles Austauschen von schadhaften Komponenten der Kühlvorrichtung 12 oder auch ein komplettes Austauschen der Kühlvorrichtung 12. Im Schadensfall wird dadurch die Ausfallzeit der Generatoranordnung 2 möglichst gering gehalten. Ein weiterer wesentlicher Vorteil ist darin zu sehen, dass der Verdichter 18, welcher als Gebläse, Radiallüfter oder auch als Kompressor ausgebildet sein kann, nicht in mechanischer Wirkverbindung mit dem Läufer 22 oder dem Ständer 24 steht. Denn bei der herkömmlichen Ausgestaltung ist die Gebläsenabe 20 unmittelbar auf dem Läufer 22 angeordnet, so dass bei einem Schaden des Gebläses 18 der Läufer 22 in Mitleidenschaft gezogen wird, was zu sehr hohen Folgekosten führt. Ein weiterer Vorteil der dargestellten seitlichen Anordnung der Kühlvorrichtung 12 ist die kürzere Bauform des Läufers 22 und insbesondere der Generatoranordnung 2. Dies führt zum einen aufgrund von Materialeinsparungen zu einer Gewichtsreduzierung. Durch die Gewichts- und die Längenreduzierung ist der Transport des Generators 25 erleichtert. Zum anderen kann das Maschinenhaus, in dem die Generatoranordnung 2 aufgestellt wird, kleiner ausgeführt werden als bei der herkömmlichen Generatoranordnung 2. Durch die seitliche Anordnung der Kühlvorrichtung 12 reduziert sich die Gesamtlänge typischerweise um etwas mehr als einen Meter, was zu deutlich reduzierten Gebäudekosten führt.
Alternativ zu der in FIG 2 vorgeschlagenen Lösung der unmittelbaren seitlichen Anordnung der Kühlvorrichtung 12 am Generator 25 ist es alternativ möglich, eine separat vom Generator 25 aufgestellte Kühlvorrichtung 12 vorzusehen, die über Gasleitungen mit dem Kühlsystem 34 beispielsweise über die vorzugsweise als Flanschanschlüsse ausgebildeten Kühlgasanschlüsse 40A,40B;42 in Verbindung steht. Auch kann die herkömmliche Kühlgasführung im Wesentlichen beibehalten werden. Die oben beschriebenen Vorteile gelten gleichermaßen für diese alternative Ausführung, bei der die Kühlvorrichtung 12 und der Generator 25 keine Baueinheit bilden, wie dies gemäß FIG 2 vorgesehen ist.

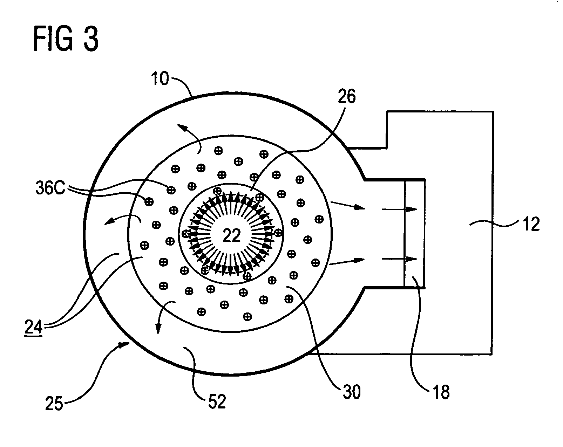

Gemäß FIG 3, die einen Querschnitt durch den Mittenbereich 38 gemäß FIG 2 zeigt, ist die Kühlvorrichtung 12 unmittelbar an einer Seite des Generators 25 angeschlossen. Aus dem Querschnitt ist der zentral angeordnete Läufer 22 zu erkennen, der konzentrisch unter Bildung des Luftspalts 26 vom Blechpaket 30 des Ständers 24 umgeben ist. Zwischen Blechpaket 30 und Gehäuse 10 des Generators befindet sich ein Ringspalt 52. Die Kühlgaskanäle 36C des Blechpakets 30 sind durch mit einem Kreuz versehene Kreise angedeutet. Im Luftspalt 26 finden sich diese Kreise wieder, um anzudeuten, dass die Strömungsrichtung des Kühlgases im Luftspalt 26 und im Blechpaket 30 gleichgerichtet ist. Aus dem Inneren des Läufers 22 tritt Warmgas in den Luftspalt 26 aus. Aus dem Blechpaket 30 tritt ebenfalls Warmgas in den Ringspalt 52 zwischen dem Blechpaket 30 und dem Gehäuse 10 aus und strömt im Ringspalt 52 zur Kühlvorrichtung 12, in dem es von dem darin angeordneten Verdichter 18 angesaugt wird.

## Patentansprüche

1. Rotationsmaschinenanordnung, insbesondere Generatoranordnung (2), mit einer Kühlvorrichtung (12) und mit einer Rotationsmaschine (25), die einen Läufer (22), einen diesen umgebenden Ständer (24) sowie ein mehrere Kühlgaskanäle (36A-D,48) aufweisendes Kühlsystem (34) umfasst, wobei die Kühlvorrichtung (12) eine separate Einheit bildet, die über einen Kühlgasanschluss (40A,B;42) mit dem Kühlsystem (34) in Verbindung steht,
**dadurch gekennzeichnet, dass**
die separate Kühlvorrichtung einen Verdichter (18) aufweist, der Warmgas von der Rotationsmaschine über den Kühlgasanschluss in der Kühlvorrichtung (12) ansaugt.

2. Anordnung nach Anspruch 2, bei der die Kühlvorrichtung (12) seitlich an der Rotationsmaschine (25) angeordnet ist.

3. Anordnung nach Anspruch 2, bei der die Kühlvorrichtung (12) mit ihrem Kühlergehäuse (39) an das Gehäuse (10) der Rotationsmaschine (25) angeschlossen ist.

4. Anordnung nach einem der Ansprüche 1 bis 3, bei der in der Kühlvorrichtung (12) Gasleitbleche (44) zur Führung des Kühlgases vorgesehen sind.

5. Anordnung nach einem der Ansprüche 1 bis 4, bei der das Kühlsystem (34) und die Kühlvorrichtung (12) zwei in axialer Richtung nebeneinander angeordnete Kühlkreisläufe (50A, B) bilden.

6. Anordnung nach Anspruch 5, bei der der Rotationsmaschine (25) an ihren Endbereichen (6,8) Kühlgas von der Kühlvorrichtung (12) über Gaszuführungen (40A, B) zuführbar und in ihrem Mittenbereich (38) über eine Gasableitung (42) wieder an die Kühlvorrichtung (12) abführbar ist.

7. Anordnung nach einem der Ansprüche 1 bis 6, bei der die Kühlvorrichtung (12) zwei Kühler (16A,B) aufweist.

8. Anordnung nach Anspruch 7 und einem der Ansprüche 5 oder 6, bei der jedem Kühlkreislauf (50A,B) jeweils ein Kühler (16A,B) zugeordnet ist.

## Claims

1. Rotating machine arrangement, in particular a generator arrangement (2), with a cooling device (12), and with a rotating machine (25), which includes a rotor (22), a stator (24) enclosing this rotor, and a cooling system (34) with several cooling gas channels (36A-D, 48), the cooling device (12) forming a separate unit, which is connected to the cooling system (34) by means of a cooling gas connector (40A, B; 42), **characterized in that** the separate cooling device has a pressurizing unit (18), which sucks warm gas from the rotating machine via the cooling gas connector in the cooling device (12).

2. Arrangement according to Claim 2, in which the cooling device (12) is arranged on the side of the rotating machine (25).

3. Arrangement according to Claim 2, in which the cooling device (12) with its cooler housing (39) is connected to the housing (10) of the rotating machine (25).

4. Arrangement according to one of Claims 1 to 3, in which gas baffle plates (44) for guiding the cooling gas are provided in the cooling device (12).

5. Arrangement according to one of Claims 1 to 4, in which the cooling system (34) and the cooling device (12) form two cooling circuits (50A, B) arranged next to one another in an axial direction.

6. Arrangement according to Claim 5, in which cooling gas can be fed from the cooling device (12) via gas feeds (40A, B) to the end areas (6,8) of the rotating machine (25), and can be discharged in its central area (38) via a gas discharge (42) to the cooling device (12) once more.

7. Arrangement according to one of Claims 1 to 6, in which the cooling device (12) has two coolers (16A, B).

8. Arrangement according to Claim 7 and one of Claims 5 or 6, in which one cooler (16A, B) is assigned to each cooling circuit (50A, B).

## Revendications

1. Agencement de machine tournante, notamment agencement de génératrice (2), comprenant un dispositif de refroidissement (12) et une machine tournante (25) qui comporte un rotor (22) et, entourant celui-ci, un stator (24), ainsi qu'un système de refroidissement (34) présentant plusieurs canaux de gaz de refroidissement (36A-D, 48), le dispositif de refroidissement (12) formant une unité séparée, qui est en communication avec le système de refroidissement (34) par l'intermédiaire d'un raccord de gaz de refroidissement (40A,B ;42),
**caractérisé en ce que** le dispositif de refroidissement séparé comprend un compresseur (18) qui aspire du gaz chaud de la machine tournante, par l'intermédiaire du raccord de gaz de refroidissement dans le dispositif de refroidissement (12).

2. Agencement selon la revendication 1, dans lequel le dispositif de refroidissement (12) est agencé latéralement sur la machine tournante (25).

3. Agencement selon la revendication 2, dans lequel le dispositif de refroidissement (12) est raccordé, par son carter (39) de refroidisseur ou de radiateur de refroidissement, au carter (10) de la machine tournante (25).

4. Agencement selon l'une des revendications 1 à 3, dans lequel il est prévu dans le dispositif de refroidissement (12), des tôles de guidage de gaz (44) pour guider le gaz de refroidissement.

5. Agencement selon l'une des revendications 1 à 4, dans lequel le système de refroidissement (34) et le dispositif de refroidissement (12) forment deux circuits de refroidissement (5A, B) disposés côte à côte dans la direction axiale.

6. Agencement selon la revendication 5, dans lequel il est possible d'amener à la machine tournante (25), au niveau de ses zones d'extrémité (6, 8), du gaz de refroidissement du dispositif de refroidissement (12), par l'intermédiaire d'amenées de gaz (40A,B), et de l'évacuer à nouveau, au niveau de sa zone centrale (38), vers le dispositif de refroidissement (12), par l'intermédiaire d'une conduite d'évacuation de gaz (42).

7. Agencement selon l'une des revendications 1 à 6, dans lequel le dispositif de refroidissement (12) comporte deux refroidisseurs ou radiateurs de refroidissement (16A,B).

8. Agencement selon la revendication 7 et l'une des revendications 5 ou 6, dans lequel à chaque circuit de refroidissement (50A,B) est associé respectivement un refroidisseur ou radiateur de refroidissement (16A,B).
